(19) Europäisches Patentamt
European Patent Office
Office européen des brevets

(11) **EP 1 613 853 B1**

(12) **EUROPÄISCHE PATENTSCHRIFT**

(45) Veröffentlichungstag und Bekanntmachung des Hinweises auf die Patenterteilung:
**15.10.2008   Patentblatt 2008/42**

(21) Anmeldenummer: 04724009.8

(22) Anmeldetag: **29.03.2004**

(51) Int Cl.:
*F02D 41/34* *(2006.01)*      *F02D 41/24* *(2006.01)*
*F02D 41/40* *(2006.01)*

(86) Internationale Anmeldenummer:
**PCT/EP2004/003303**

(87) Internationale Veröffentlichungsnummer:
**WO 2004/090315 (21.10.2004 Gazette 2004/43)**

(54) **VERFAHREN ZUR BESTIMMUNG DER EINSPRITZZEITDAUER BEI EINER BRENNKRAFTMASCHINE MIT EINEM KENNFELDWERT UND EINEM KORREKTURWERT UND VERFAHREN ZUR ERMITTLUNG DES KORREKTURWERTS**

METHOD FOR DETERMINING THE INJECTION DURATION IN A COMBUSTION ENGINE WITH A MAPPING VALUE AND A CORRECTION VALUE, AND METHOD FOR DETERMINING THE CORRECTION VALUE

PROCEDE POUR DETERMINER UNE DUREE D'INJECTION DANS UN MOTEUR A COMBUSTION INTERNE AVEC UNE VALEUR DE CARACTERISTIQUES ET UNE VALEUR DE CORRECTION, ET PROCEDE POUR DETERMINER LA VALEUR DE CORRECTION

(84) Benannte Vertragsstaaten:
**DE FR GB IT**

(30) Priorität: **11.04.2003   DE 10316811**

(43) Veröffentlichungstag der Anmeldung:
**11.01.2006   Patentblatt 2006/02**

(73) Patentinhaber: **Continental Automotive GmbH**
**30165 Hannover (DE)**

(72) Erfinder:
• **FRITSCH, Jürgen**
  **93059 Regensburg (DE)**
• **KONGTORANIN, Treerapot Prawate,**
  **10250 Bangkok (TH)**
• **LENTINI, Antonio**
  **50937 Köln (DE)**
• **NIENHOFF, Michael**
  **93053 Regensburg (DE)**
• **VALERO-BERTRAND, Diego**
  **93047 Regensburg (DE)**

(56) Entgegenhaltungen:
**WO-A-99/47802**      **DE-A- 19 712 143**
**DE-A- 19 937 148**   **US-A1- 2003 029 415**

**EP 1 613 853 B1**

## Beschreibung

Die Erfindung betrifft ein Verfahren zur Bestimmung der Einspritzzeitdauer einer Einspritzung von Kraftstoff in eine Brennkraftmaschine gemäß dem Oberbegriff des Patentanspruchs 1.

Bei der Einspritzung von Kraftstoff in eine Brennkraftmaschine ist es aufgrund von Abgasvorschriften und einem gewünschten geringen Kraftstoffverbrauch der Brennkraftmaschine erforderlich, die einzuspritzende Kraftstoffmenge präzise festzulegen. Die eingespritzte Kraftstoffmenge wird durch die Einspritzzeitdauer und den Kraftstoffdruck festgelegt. Bei Common-Rail Einspritzsystemen werden mehrere Einspritzventile von einem Kraftstoffreservoir mit Kraftstoff mit einem einstellbaren Druck versorgt. Durch die Öffnung der Einspritzventile bei einen Einspritzvorgang kommt es zu Druckschwankungen im Kraftstoffspeicher, im Einspritzventil und dessen Zuleitung. Die Druckschwankungen verändern den Kraftstoffdruck und müssen bei der Berechnung der Einspritzzeitdauer berücksichtigt werden.

Aus EP 1 064 457 B1 ist ein Verfahren zum Bestimmen der Einspritzzeitdauer bei einer mit Kraftstoffdirekteinspritzung arbeitenden Brennkraftmaschine bekannt, bei dem eine Gesamtmenge an Kraftstoff, die einem Zylinder der Brennkraftmaschine zuzuführen ist, auf mindestens zwei Einspritzvorgänge pro Zylinderhub aufgeteilt wird. Die durch den vorausgehenden Einspritzvorgang auftretende Druckschwankung im Einspritzventil und in der Leitung zwischen dem Hochdruckspeicher und dem Einspritzventil wird bei der Bestimmung der Einspritzzeitdauer für den nächsten Einspritzvorgang berücksichtigt. Zur Berücksichtigung der Druckschwankungen wird ein Korrekturterm ermittelt, mit dem der Druck des Hochdruckspeichers korrigiert wird. Mit dem korrigierten Druckwert wird die Einspritzzeitdauer präzise ermittelt. Die Einspritzzeitdauer wird abhängig von der einzuspritzenden Kraftstoffmenge und abhängig von dem korrigierten Druckwert berechnet.

Die DE 199 37 148 A1 offenbart ein Verfahren zur Bestimmung der Kraftstoffeinspritzmenge von Injektoren einer Brennkraftmaschine. Die Kraftstoffeinspritzmenge ist hier bestimmbar, wenn die Einspritzmenge der nachfolgenden Kraftstoffeinspritzung mit einem Schwankungsbeiwert korrigiert wird. Dieser Schwankungsbeiwert wird in Abhängigkeit eines vorgesehenen festen Zeitintervalls zwischen einzelnen Teileinspritzungen und einer Druckschwingungsfrequenz in einer Druckleitung eines Common Rails ermittelt. Die Druckschwingungsfrequenz ist dabei in einem Kennfeld, abhängig von der Kraftstofftemperatur und dem Druck hinterlegt. Weiterhin wird zur Bestimmung des Schwankungsbeiwerts die Menge des einzuspritzenden Kraftstoffes bei der ersten Teileinspritzung, sowie bei der darauf folgenden zweiten Teileinspritzung berücksichtigt.

Die Aufgabe der Erfindung besteht darin, ein verbessertes Verfahren zur Bestimmung der Einspritzzeitdauer einer auf eine erste Einspritzung folgende zweite Einspritzung eines Verbrennungsvorganges bereit zu stellen. Weiterhin besteht die Aufgabe der Erfindung darin, ein einfaches Verfahren zur Ermittlung des Korrekturwertes bereit zu stellen.

Die Aufgabe der Erfindung wird durch das Verfahren gemäß Patentanspruch 1 gelöst.

Das Verfahren gemäß Patentanspruch 1 weist den Vorteil auf, dass die Einspritzzeitdauer einfacher und präziser berechnet wird. Zur Berechnung der Einspritzzeitdauer werden ein Kennfeldwert und ein Korrekturwert verwendet. Der Kennfeldwert wird in Abhängigkeit von dem Kraftstoffdruck und abhängig von der einzuspritzenden Kraftstoffmasse aus einem Kennfeld ausgelesen. Der Korrekturwert wird abhängig von dem zeitlichen Abstand zwischen der folgenden Einspritzung und wenigstens einer letzten Einspritzung berechnet. Durch die Verwendung des Korrekturwertes wird in einfacher Weise der Einfluss der Druckschwankungen auf die Einspritzmengen berücksichtigt, die durch die wenigstens letzte Einspritzung verursacht wird. Mit dem erfindungsgemäßen Verfahren ist es im Gegensatz zu dem aus dem Stand der Technik bekannten Verfahren nicht erforderlich, eine Druckkorrektur mit relativ aufwendigen Methoden zu bestimmen. Dadurch, dass der Korrekturwert abhängig von der Zeitdifferenz zwischen der letzten Einspritzung und der folgenden Einspritzung direkt die Einspritzzeitdauer beeinflusst, ist eine einfache und schnelle Berechnung einer präzisen Einspritzzeitdauer möglich.

Weitere vorteilhafte Ausführungsformen der Erfindung sind in den abhängigen Ansprüchen angegeben.

In einer bevorzugten Ausführungsform weist der Korrekturwert einen Schwingungsfaktor auf, der den Einfluss der Schwingungen der Druckschwankungen präziser berücksichtigt. Die dem Korrekturwert zugrundeliegenden Abhängigkeiten werden vorzugsweise für jeden Typus von Einspritzventil experimentell ermittelt und in einer entsprechenden Funktion oder einer entsprechenden Tabelle zur Verfügung gestellt. Durch die Berücksichtigung der Druckschwingungen auf die Mengenschwankungen ist eine präzise Berücksichtigung der druckschwankungsinduzierten Mengenschwankungen bei der Ermittlung der Einspritzzeitdauer möglich.

In einer bevorzugten Ausführungsform werden als Schwingungsfaktor Sinus- und/oder Kosinusfunktionen verwendet. Mit Hilfe der Sinus- und Kosinusfunktionen ist eine relativ präzise und einfache Beschreibung der Korrekturen für verschiedenste Arten von Einspritzventilen möglich. Die Parameter der Funktion sind abhängig vom Druck und der Temperatur des Kraftstoffs, sowie von den Einspritzzeitdauern und Mengen aller Einspritzungen. Korrekturen, die betriebsbedingte Veränderungen der hydraulischen Komponenten (insbesondere der Einspritzventile) erfassen, können ebenfalls berücksichtigt werden.

In einer weiteren bevorzugten Ausführungsform verwendet das erfindungsgemäße Verfahren einen Korrekturwert, der wenigstens teilweise einen Dämpfungsfaktor aufweist. Mit Hilfe des Dämpfungsfaktors wird ein Abklingen der Druck- bzw. Mengen schwankungen berücksichtigt. Somit ist eine präzisere Bestimmung der Einspritzzeitdauer möglich.

In einer einfachen und bevorzugten Ausführungsform wird als Dämpfungsfaktor eine abklingende Exponentialfunktion verwendet, die von der Zeitdifferenz zwischen der folgenden und der letzten Einspritzung abhängt. Zur Berechnung der Einspritzzeitdauer einer Einspritzung wird der Einfluss aller vorhergehenden, bereits korrigierten Einspritzungen eines Segments berücksichtigt. Im Wesentlichen kann der Einfluss aller vorhergehenden Einspritzungen eines Segments auf eine folgende Einspritzung in Form einer additiven Überlagerung der Einflüsse jeder einzelnen aller vorhergehenden Einspritzungen auf die folgende beschrieben werden. Anhand weiterer Korrekturterme können die Wechselwirkungen aller vorhergehenden Einspritzungen untereinander und deren Auswirkung auf die folgende Einspritzung berücksichtigt werden.

In einem weiteren bevorzugten Verfahren, bei dem mehrere Voreinspritzungen vor einer Haupteinspritzung erfolgen, wird für jede Voreinspritzung die Einspritzzeitdauer gemäß dem Verfahren nach Anspruch 1 berechnet und für alle Voreinspritzungen, die vor der Haupteinspritzung erfolgt sind, wird jeweils ein Störfaktor bei der Berechnung der Einspritzzeitdauer der Haupteinspritzung berücksichtigt.

In einer weiteren vorteilhaften Ausführungsform des Verfahrens wird bei der Festlegung des Einspritzbeginns und der Einspritzzeitdauer der Voreinspritzungen und des Einspritzbeginns der folgenden Haupteinspritzung ein minimaler Abstand und ein Sicherheitsabstand in einem ersten Verfahrensschritt festgelegt. Anschließend wird in einem folgenden Verfahrensschritt die korrigierte Zeitdauer der Voreinspritzungen nach dem Verfahren nach Anspruch 1 berechnet. Der Sicherheitsabstand ist in vorteilhafter Weise so gewählt, dass bei der Verlängerung der Einspritzzeitdauern der Voreinspritzungen der festgelegte minimale zeitliche Abstand zwischen dem Ende der Voreinspritzungen und dem Beginn der Haupteinspritzung nicht unterschritten wird. Mit diesem Verfahren ist sicher gestellt, dass ein minimaler zeitlicher Abstand zwischen den Voreinspritzungen und der ersten Haupteinspritzung sicher eingehalten wird. Damit wird sicher gestellt, dass trotz des erfindungsgemäßen Verfahrens die Qualität der Einspritzung und die Qualität der Drehmomentabgabe der Brennkraftmaschine nicht nachteilig beeinflusst wird.

Vorzugsweise werden weitere Korrekturwerte verwendet, die Druckschwankungen berücksichtigen, die von vorausgehenden Einspritzungen von Verbrennungsvorgängen der Brennkraftmaschine berücksichtigt werden. Damit können auch Einspritzvorgänge anderer Einspritzventile berücksichtigt werden.

Die Erfindung wird im folgenden anhand der Figuren näher erläutert. Es zeigen:

Figur 1     eine schematische Darstellung eines Einspritzsystems für eine Brennkraftmaschine,
Figur 2     ein schematisches Diagramm zur Erläuterung des erfindungsgemäßen Verfahrens,
Figur 3     ein schematisches Diagramm zur Erläuterung der Bestimmung des Korrekturfaktors und
Figur 4     Diagramme für Einspritzverläufe.

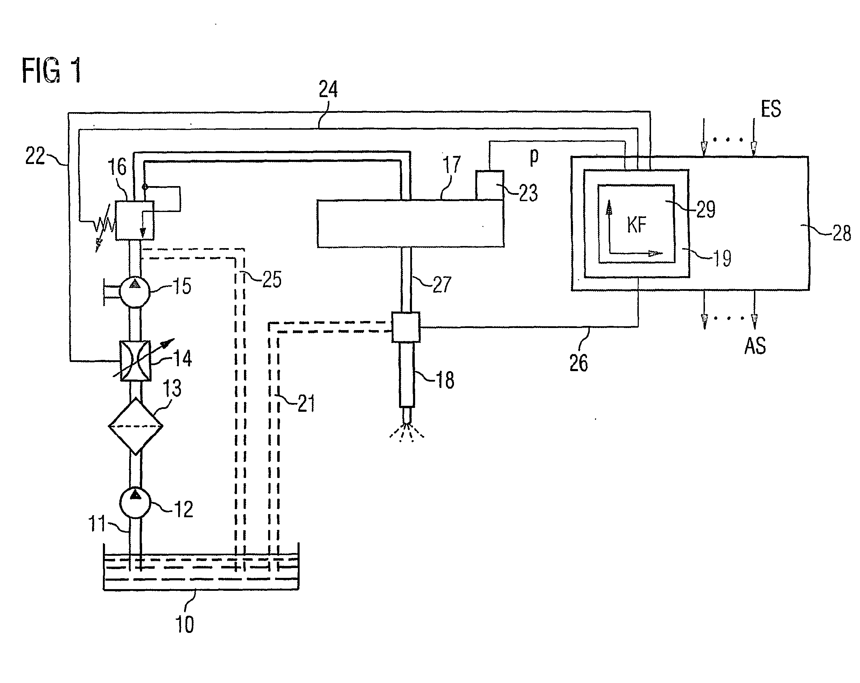

Figur 1 zeigt einen schematischen Aufbau eines Kraftstoffeinspritzsystems für eine mit Kraftstoffdirekteinspritzung arbeitende Brennkraftmaschine, die als Common-Rail-Einspritzsystem bei mit Diesel oder Benzin betriebenen Brennkraftmaschinen eingesetzt wird.

Bei dem Einspritzsystem wird Kraftstoff aus einem Kraftstoffvorratsbehälter 10 über eine Kraftstoffleitung 11 von einer Vorförderpumpe 12 angesaugt. Die Vorförderpumpe 12 fördert den Kraftstoff über ein Kraftstofffilter 13 zu einer Hochdruckpumpe 15. Die Hochdruckpumpe 15 verdichtet den Kraftstoff mit einem hohen Druck und speist den Kraftstoff in einen Hochdruckspeicher 17 ein.

Um den Volumenstrom der Hochdruckpumpe 15 in den Hochdruckspeicher 17 entsprechend den jeweiligen Betriebsbedingungen der Brennkraftmaschine bedarfsgerecht einstellen zu können, ist in der Kraftstoffleitung 11 zwischen der Vorförderpumpe 12 und der Hochdruckpumpe 15 ein zusätzliches Saugdrosselventil 14 angeordnet. Mit Hilfe des Saugdrosselventils 14 wird der Förderstrom der Hochdruckpumpe 15 geregelt. Das Saugdrosselventil 14 wird von einer Steuereinheit 19 über eine erste Steuerleitung 22 angesteuert. Die Steuereinheit 19 ist vorzugsweise in ein elektronisches Steuergerät 28 der Brennkraftmaschine integriert, das alle zum Betrieb der Brennkraftmaschine nötigen Abläufe steuert und/oder regelt. Hierzu werden dem Steuergerät 28 der Brennkraftmaschine eine Vielzahl mittels entsprechender Sensoren aufgenommener Eingangssignale ES zugeführt. Über entsprechende Ausgangssignale AS werden die einzelnen Aktoren und Komponenten angesteuert, die zum Betrieb der Brennkraftmaschine notwendig sind.

Um den Druck im Hochdruckspeicher 17 entsprechend den gewünschten Betriebsbedingungen der Brennkraftmaschine einstellen zu können, ist weiterhin ein Druckregelventil 16 zwischen die Hochdruckpumpe 15 und den Hochdruckspeicher 17 geschaltet. Das Druckregelventil 16 steuert und/oder regelt über eine Rücklaufleitung 25 überschüssigen Kraftstoff, der nicht zur Aufrechterhaltung eines im Hochdruckspeicher 17 gewünschten Drucks benötigt wird, in den Kraftstoffvorratsbehälter 10 ab. Der Haltedruck des Druckregelventils 16 wird von der Steuereinheit 19 über eine zweite Steuerleitung 24 eingestellt. Zur Druckregelung im Hochdruckspeicher 17 ist weiterhin ein Drucksensor 23 vorgesehen. Der Drucksensor 23 dient zum Erfassen des im Hochdruckspeicher 17 herrschenden Kraftstoffdruckes p, auf dessen Grundlage die Steuereinheit 19 entsprechend den gewünschten Betriebsbedingen der Brennkraftmaschine die Druckregelung über das Druckregelventil 16 vornimmt. Anstelle der dargestellten Mengenregelung des Einspritzsystems kann auch eine mengengesteuerte Hochdruckpumpe 15 vorgesehen sein, die den Hochdruckspeicher 17 entsprechend den gewünschten Betriebsbedingungen der Brennkraftmaschine mit Kraftstoff mit entsprechenden Druck versorgt.

Im Hochdruckspeicher 17 lassen sich mit Hilfe der dargestellten Druckregeleinrichtungen Kraftstoffdrücke von bis zu 1800 bar erzeugen. Der Kraftstoffdruck, der im Hochdruckspeicher 17 herrscht, steht über Einspritzleitungen 27 an Einspritzventilen 18 an. Die Einspritzventile 18 sind Brennkammern der Brennkraftmaschine zugeordnet. Die Einspritzventile 18 weisen im Allgemeinen eine Einspritzdüse auf, die mit einer unter Federkraft stehenden Nadel verschlossen ist. Ein Einspritzvorgang wird durch die Steuereinheit 19 ausgelöst, die über dritte Steuerleitungen 26 mit den Einspritzventilen 18 verbunden ist. Die Steuereinheit 19 legt dabei den Einspritzbeginn und die Einspritzzeitdauer der jeweiligen Einspritzungen fest. Die Einspritzventile 18 sind weiterhin über Leckageleitungen 21 mit dem Kraftstoffvorratsbehälter 10 verbunden. Über die Leckageleitungen 21 werden in den Einspritzventilen 18 auftretende Leckageströme zum Kraftstoffvorratsbehälter 10 zurück geführt.

In modernen Einspritzsystemen werden für einen Verbrennungsvorgang, d. h. für einen Verbrennungstakt eines Zylinders, mehrere Einspritzungen in eine Brennkammer der Brennkraftmaschine ausgeführt. Mehrere Einspritzungen haben den Vorteil, dass der Verbrennungsvorgang präziser gesteuert werden kann, um beispielsweise bei Diesel-Brennkraftmaschinen durch die Verwendung von wenigstens einer Voreinspritzung und wenigstens einer Haupteinspritzung das Verbrennungsgeräusch deutlich zu reduzieren und bei der Verwendung weiterer Einspritzungen nach der Haupteinspritzung Emissionen zu reduzieren. Das Ausführen mehrerer Einspritzungen über ein Einspritzventil 18 während eines Verbrennungsvorganges einer Brennkammer weist jedoch den Nachteil auf, dass die einzelnen Einspritzungen zu Druckschwankungen am Einspritzventil 18 führen, die sich auf die folgenden Einspritzungen auswirken. Druckschwankungen bewirken eine Veränderung der während der festgelegten Einspritzzeitdauer in die Brennkammer abgegebene Kraftstoffmasse. Das erfindungsgemäße Verfahren dient dazu, die Druckschwankungen für die Bestimmung der Einspritzzeitdauer und damit für die präzise Zumessung der gewünschten Kraftstoffmasse zu berücksichtigen.

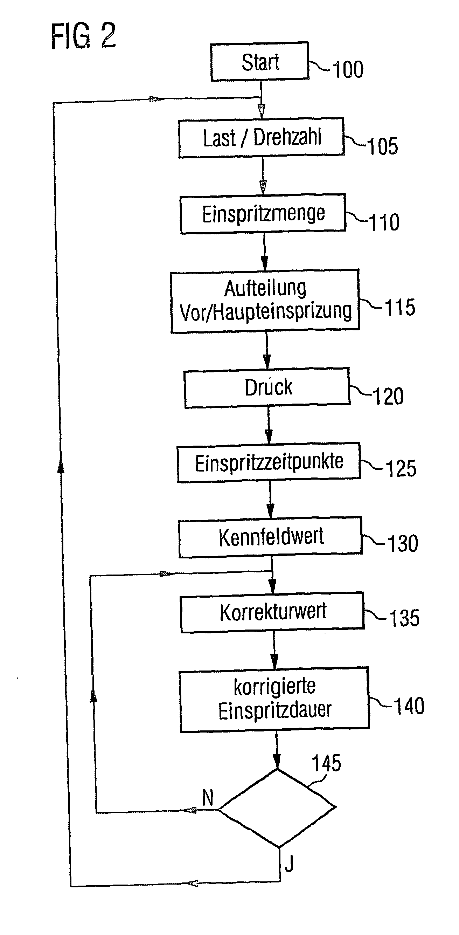

Figur 2 zeigt anhand eines schematischen Programmablaufs die Durchführung des Verfahrens. Bei Programmpunkt 100 startet das Steuergerät 28 den Betrieb der Brennkraftmaschine. Dabei erfasst das Steuergerät 28 beim folgenden Programmpunkt 105 alle wesentlichen Betriebsparameter der Brennkraftmaschine, insbesondere die Last- und die Drehzahl. Das Steuergerät 28 regelt in Abhängigkeit von der Last- und der Drehzahl der Brennkraftmaschine den Kraftstoffdruck im Hochdruckspeicher 17. Beim folgenden Programmpunkt 110 berechnet die Steuereinheit 19 für jede Brennkammer, d. h. für jeden Zylinder der Brennkraftmaschine die für den folgenden Verbrennungsvorgang einzuspritzende Gesamtkraftstoffmenge. Anschließend bestimmt die Steuereinheit 19 beim folgenden Programmpunkt 115 die Aufteilung der Gesamteinspritzmenge für einen Verbrennungsvorgang eines Zylinders auf eine festgelegte Anzahl von kleineren Voreinspritzmengen und eine festgelegte Anzahl von größeren Haupteinspritzmengen. In dem folgenden Beispiel wird davon ausgegangen, dass die Gesamteinspritzmenge in zwei kleinen Voreinspritzungen und in zwei größeren Haupteinspritzungen aufgeteilt wird. Die Einspritzmenge für eine Haupteinspritzung ist beispielsweise dreimal so groß wie die Einspritzmenge für eine Voreinspritzung.

Beim folgenden Programmpunkt 120 erfasst die Steuereinheit 19 über den Drucksensor 23 den aktuell im Hochdruckspeicher 17 herrschenden Kraftstoffdruck. Beim folgenden Programmpunkt 125 ermittelt die Steuereinheit 19 abhängig von der Last- und der Drehzahl der Brennkraftmaschine die Einspritzzeitpunkte für die erste und die zweite Voreinspritzung und für die erste und die zweite Haupteinspritzung. Anschließend berechnet die Steuereinheit 19 bei Programmpunkt 130 in Abhängigkeit von einem Kennfeld 29, das in einem Speicher des Steuergerätes 28 abgelegt ist, die Zeitdauern der einzelnen Vor- und Haupteinspritzungen. Die Zeitdauern der Einspritzungen werden aus dem Kennfeld in Abhängigkeit vom gemessenen Kraftstoffdruck und in Abhängigkeit von der bei Programmpunkt 115 festgelegten Einspritzmengen ausgelesen. Die Steuereinheit 19 legt eine erste Einspritzzeitdauer T1 für die erste Voreinspritzung, eine zweite Einspritzzeitdauer T2 für die zweite Voreinspritzung eine dritte Einspritzzeitdauer T3 für die erste Haupteinspritzung und eine vierte Einspritzzeitdauer T4 für die zweite Haupteinspritzung fest.

Beim folgenden Programmpunkt 135 berechnet die Steuereinheit 19 nach folgender Formel 1 einen Korrekturfaktor für die Einspritzzeitdauern der Einspritzungen:

$$TI_{fol} = TI_{fol,bas}(p, mf_{fol}) + \Delta TI_{fol} \qquad (1)$$

Mit $TI_{fol}$ ist die korrigierte Einspritzzeitdauer, mit $TI_{fol,bas}$ ist ein Kennfeldwert für die Einspritzzeitdauer bezeichnet, der aus dem Kennfeld 29 in Abhängigkeit vom Kraftstoffdruck p und in Abhängigkeit von der einzuspritzenden Kraftstoffmenge $mf_{fol}$ ermittelt wurde. Mit $\Delta TI_{fol}$ ist ein Korrekturwert für die Einspritzzeitdauer bezeichnet. Der Kennfeldwert ist richtig, solange keine Einflüsse durch Druckschwankungen bestehen. Somit kann für die erste Voreinspritzung der aus dem Kennfeld 29 ausgelesene Kennfeldwert für die Einspritzzeitdauer verwendet werden. Für die folgenden Einspritzungen ist es jedoch erforderlich, den Korrekturwert für die Einspritzzeitdauer zu bestimmen. Die Druckschwankungen, die durch die letzte Einspritzung verursacht wurden, werden durch den Korrekturwert berücksichtigt. Der Korrekturwert kann beispielsweise in Form einer Summe von exponentiell abfallenden Sinus- oder Kosinusfunktionen bestimmt werden. Beispielsweise wird der Korrekturwert nach folgender Formel 2 berechnet:

$$\Delta TI_{fol} = \sum_{(i=1)}^{N} A_i \sin(2\pi f_i \circ t_{dif} + \varphi_i) \circ \exp(-\gamma_i \circ t_{dif}) \qquad (2)$$

Formel 2 berücksichtigt als Korrekturwert für die Einspritzzeitdauer den Kraftstoffdruck, die Kraftstofftemperatur, die Einspritzzeitdauern der Einspritzungen und die Einspritzmengen. Die Amplituden $A_i$ der Formel 2 hängen vom Kraftstoffdruck und von der Einspritzzeitdauer der letzten Einspritzung ab. Zur Ermittlung der Amplituden sind entsprechende Tabellen oder Kennfelder abgelegt. Zur Berücksichtigung der Einspritzmenge der folgenden Einspritzung oder des Zeitbeginns der folgenden Einspritzung können entsprechende Korrekturterme verwendet werden. Darüber hinaus können Korrekturen bezüglich der Dauer der folgenden Einspritzzeitdauer berücksichtigt werden.

Mit $\phi i$ wird ein Korrekturterm bezeichnet, der vom Kraftstoffdruck und von den Einspritzzeitdauern der folgenden und der letzten Einspritzung abhängt. Beispielsweise kann der Phasenwinkel $\phi_i$ nach folgender Formel 3 berechnet werden:

$$\varphi_i = \varphi_{1st}(p, TI_{1st}) + \varphi_{fol}(p, TI_{fol,bas}) \qquad (3)$$

Mit p ist der Kraftstoffdruck, mit $TI_{1st}$ ist die Einspritzzeitdauer der letzten Einspritzung und mit $TI_{fol,bas}$ ist die Einspritzzeitdauer der folgenden Einspritzung bezeichnet. Die Schallgeschwindigkeit im Kraftstoff hängt vom Kraftstoffdruck und von der Kraftstofftemperatur ab. Zur Berücksichtigung der Schallgeschwindigkeit werden die Frequenzen $f_i$ verwendet, die vom Kraftstoffdruck und von der Temperatur des Kraftstoffes abhängen. Die Frequenzen $f_i$ werden experimentell ermittelt.

Formel 2 weist weiterhin eine Dämpfungskonstante $\gamma_i$ auf. Die Dämpfung der Druckwellen, die von den Einspritzungen erzeugt werden, hängt vom Kraftstoffdruck p und von der Kraftstofftemperatur TFU und von den Einspritzzeitdauern der letzten und der folgenden Einspritzung ab. Beispielsweise kann die Dämpfungskonstante $\gamma_i$ nach folgender Formel (4) berechnet werden:

$$\gamma_i = const_i \cdot f_i \qquad (4)$$

wobei $const_i$ einen Vorfaktor bezeichnet.

Formel 2 weist weiterhin eine Zeitdifferenz $t_{dif}$ auf, welche die Zeitdifferenz zwischen dem Einspritzende der letzten Einspritzung und dem Einspritzbeginn der folgenden Einspritzung bezeichnet. Der Index i der Formel 2 bezeichnet die Anzahl der Koeffizienten, die durch die Anzahl der Frequenzen festgelegt ist, die zur Festlegung des Korrekturterms notwendig sind. Normalerweise ist eine geringe Anzahl von beispielsweise N = 2 ausreichend, um den Korrekturterm relativ präzise festzulegen.

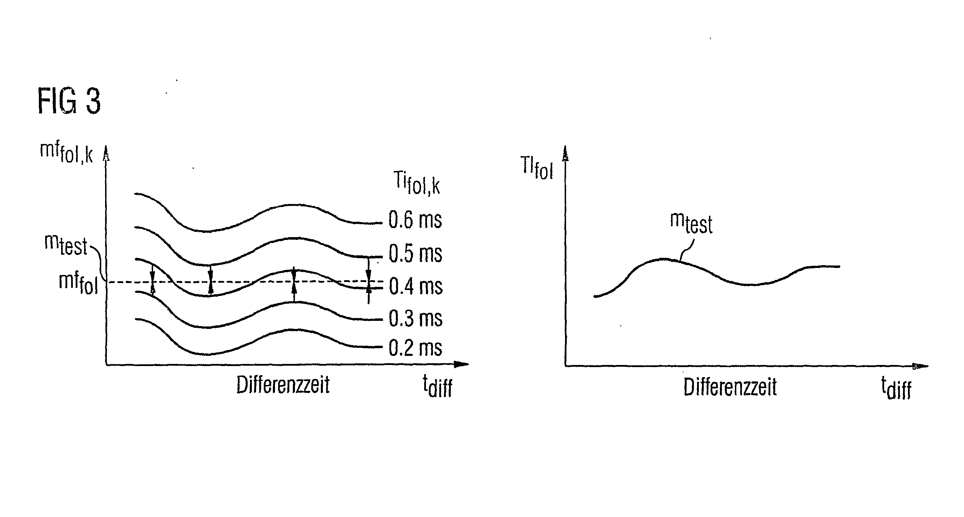

Formel 2 wird dazu verwendet, um Korrekturwerte für die Einspritzzeitdauer einer Einspritzung zu berechnen. Die Abhängigkeit der Parameter vom Kraftstoffdruck, der Kraftstofftemperatur, Einspritzzeitdauern und Einspritzmengen wird experimentell erfasst und in entsprechenden Tabellen oder Kennfeldern abgelegt. Die Abhängigkeiten werden dadurch festgelegt, dass eine Einspritzzeitdauer der folgenden Einspritzung gemessen wird, welche erforderlich ist, um eine von der Differenzzeit $t_{dif}$ unabhängige konstante Einspritzmenge zu erhalten. Bei der Messung wird die Differenzzeit zwischen der letzten und der folgenden Einspritzung von der kleinsten anwendbaren Differenzzeit bis zu einem maximalen Wert von beispielsweise einigen Millisekunden variiert. Der Einspritzdruck und die Einspritzzeitdauer werden für die letzte Einspritzung während des Messverfahrens konstant gehalten. Figur 3 zeigt in dem linken Diagramm ein Kennfeld für eine Einspritzung, der bereits eine Einspritzung derselben Verbrennung vorausging. Die dargestellten Diagrammlinien werden experimentell ermittelt und stellen für verschiedene Einspritzzeitdauern $TI_{fol,k}$ in Abhängigkeit von der Differenzzeit $t_{dif}$ die tatsächlich eingespritzte Kraftstoffmengen $mf_{fol,k}$ dar.

Aus dem dargestellten linken Diagramm kann für eine gewünschte Einspritzmenge abhängig von der Differenzzeit $t_{dif}$ die entsprechende Einspritzzeitdauer $TI_{fol,k}$ durch Interpolation berechnet werden. Sollen beispielsweise für die Ein-

spritzmenge $m_{test}$ die Einspritzzeitdauern über die Differenzzeit $t_{dif}$ ermittelt werden, ergibt sich eine Kennlinie für die Einspritzzeitdauern $TI_{fol}$ in Abhängigkeit von der Differenzzeit $t_{dif}$, wie im rechten Diagramm dargestellt.

Zur Ermittlung der Korrekturwerte werden von den im Testverfahren ermittelten Einspritzzeitdauern $TI_{fol,k}$ die für den Betriebspunkt abgelegten Kennfeldwerte abgezogen, um die Korrekturwerte zu erhalten. Die Korrekturwerte werden in Tabellen oder Kennfeldern abgelegt, die vom Kraftstoffdruck, der einzuspritzenden Kraftstoffmenge, der Differenzzeit und von der Einspritzzeitdauer abhängen.

Zur Reduzierung des Speicherbedarfs werden vorzugsweise die Kennlinienfelder für die Korrekturwerte nicht selbst abgelegt, sondern die Kennlinienfelder werden in Form der Formeln 1 bis 4, die eine relativ genaue Ermittlung der Korrekturwerte erlauben, abgelegt.

In einem weiteren Testverfahren wird für eine bestimmte Differenzzeit $t_{dif}$ die Einspritzzeitdauer $TI_{fol}$ variiert, bis die folgende Einspritzung die gewünschte Einspritzmenge abgibt. Dabei wird die vom Einspritzventil abgegebene Kraftstoffmenge gemessen. In einem anderen Ansatz werden die Einspritzmengen $mf_{fol,k}$ der folgenden Einspritzung in einem Raster abhängig von den Einspritzzeitdauern der folgenden Einspritzung $TI_{fol,k}$ erfasst, wobei k von 1 bis L läuft. Die Einspritzzeitdauern für die folgende Einspritzung $TI_{fol}$, die notwendig sind, um eine gewünschte Einspritzmenge $mf_{fol}$ zu erhalten, werden iterativ über Interpolationsverfahren aufgrund folgender Beziehung: $mf_{fol,k} = mf_{fol} (TI_{fol,k})$ bestimmt.

Die Berechnungen und Messungen, wie in Figur 3 dargestellt, müssen wiederholt für verschiedene Drücke und Einspritzzeitdauern der ersten Einspritzung und für verschiedene Einspritzmengen der folgenden Einspritzung durchgeführt werden.

Die Einspritzzeitdauern $TI_{fol}$ der folgenden Einspritzung sind Funktionen der Differenzzeit $t_{dif}$ mit parametrischen Abhängigkeiten vom Kraftstoffdruck, der Kraftstofftemperatur, den Einspritzzeitdauern der ersten Einspritzung, den gewünschten Einspritzmengen der folgenden Einspritzung und weiteren Größen. Insbesondere bestehen Korrekturmöglichkeiten, die betriebsbedingte Veränderungen der hydraulischen Komponenten, wie zum Beispiel der Einspritzventile, berücksichtigen.

Die Amplituden $A_i$, die Frequenzen $f_i$, die Phasen $\varphi_i$ und die Dämpfungsfaktoren $\gamma_i$, die für die Bestimmung der Einspritzzeitdauer der folgenden Einspritzung $TI_{fol}$ verwendet werden, werden nach einem Least-Square-Schätzverfahren aus den Formeln 1 und 2 berechnet. Vorzugsweise werden zur Optimierung der Formeln und zur Reduzierung von numerischen Ungenauigkeiten die Ergebnisse aller Schätzformeln miteinander verglichen und analysiert.

Ein alternativer Ansatz um die funktionalen Abhängigkeiten der Amplituden, Frequenzen, Phasen und Dämpfungsfaktoren zu bestimmen, besteht in einem automatisierten Messverfahren, in dem ein passendes Netz von Messpunkten, das durch Drücke, Einspritzzeitdauern, Einspritzmengen und Differenzzeiten bestimmt ist, verwendet wird, um eine optimale Auslegung der Formel 1 und 2 zu erreichen. Das Messverfahren verwendet gemessene Einspritzmengen, um die Parameter Einspritzzeitdauer, Differenzzeit und Kraftstoffdruck zu erfassen.

In einem Fall von drei oder mehr Einspritzungen für einen Einspritzvorgang eines Zylinders einer Brennkraftmaschine wird folgende Formel 5 verwendet:

$$TI_N = TI_{N,bas} (p, mf_N) + \Delta TI(1, N) + \Delta TI(2, N) + ... + \Delta TI(N-1, N) \quad (5)$$

Die N-te Einspritzung, die als folgende Einspritzung bezeichnet ist, wird durch die Druckwellen beeinflusst, die durch alle vorhergehenden N-1 Einspritzungen erzeugt wurden. Entsprechend dem Überlagerungsprinzip wird die korrigierte Einspritzzeitdauer $TI_N$ der N-ten Einspritzung der Formel 3 berechnet. Mit $TI_{N,bas} (p, mf_N)$ wird der Kennfeldwert für die Einspritzzeitdauer der N-ten Einspritzung bezeichnet, die aus dem Kennfeld aufgrund des gemessenen Kraftstoffdruckes p und der gewünschten Einspritzmenge $mf_N$ ausgelesen wurde. Jeder der einzelnen Terme $\Delta TI(j, N)$, wobei j von 1 bis N-1 läuft, ist entsprechend dem Verfahren berechnet, das im vorherigen Abschnitt beschrieben wurde und bezeichnet den Korrekturwert zwischen der j-ten und der N-ten Einspritzung.

In Formel 5 werden nur die Auswirkungen zwischen der ersten und der N-ten, zwischen der zweiten und der N-ten, usw. bis zur N-1ten und der N-ten Einspritzung berücksichtigt. Dabei wird vernachlässigt, dass die erste die zweite und die zweite die dritte und die N-1 mit der N-ten Einspritzung beeinflusst. Die gegenseitige Beeinflussung der einzelnen Einspritzungen kann über entsprechende Korrekturterme berücksichtigt werden.

Die Verwendung des erfindungsgemäßen Verfahrens zur Anpassung der Einspritzzeitdauern muss verschiedene Anforderungen erfüllen. Für eine Korrektur der Einspritzzeitdauer einer betrachteten Einspritzung müssen folgende Größen festgelegt werden und dürfen nicht verändert werden. Der Beginn der Einspritzzeitdauern aller Einspritzungen, die Einspritzzeitdauer aller vorausgehenden Einspritzungen und die gewünschte Einspritzmenge der betrachteten Einspritzung. Eine Korrektur einer Einspritzzeitdauer einer betrachteten Einspritzung wird dadurch erreicht, dass das Ende der Einspritzung verändert wird, während der Einspritzbeginn der Einspritzung konstant bleibt. Da eine Korrektur einer betrachteten Einspritzung üblicherweise zu einer Veränderung der Zeitabstände zu allen anderen Einspritzungen führt, muss die betrachtete Einspritzung korrigiert werden, bevor alle folgenden Einspritzungen einem Korrekturverfahren unterzogen werden. Damit die oben genannten Voraussetzungen erfüllt werden, muss das erfindungsgemäße Korrekturverfahren mit dem Steuerungsverfahren der Brennkraftmaschine kombiniert werden, das eine letzte Überprüfung der Abstandszeiten zwischen den Einspritzungen und den Einspritzzeitdauern der Einspritzungen durchführt.

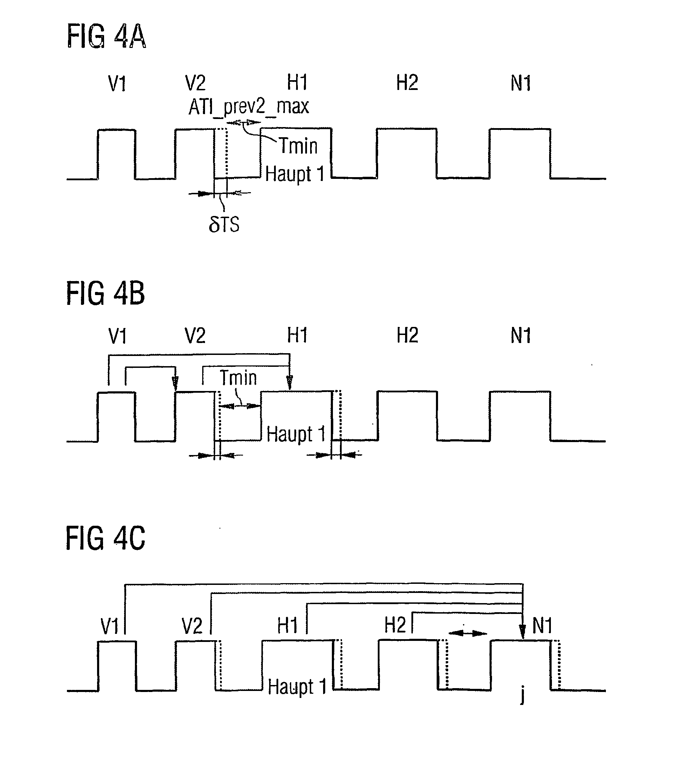

Anhand von Figur 4 wird im Folgenden das Überprüfungsverfahren näher erläutert. Üblicherweise wird zuerst der Einspritzbeginn und die Einspritzzeitdauer der ersten Haupteinspritzung berechnet und festgelegt. Die erste Haupteinspritzung ist die bedeutendste Einspritzung für das von der Brennkraftmaschine abgegebene Drehmoment. Mögliche Korrekturen der Einspritzzeitdauern von Einspritzungen, die vor der ersten Haupteinspritzung durchgeführt werden, dürfen die Abstandszeit zwischen der ersten Haupteinspritzung und dem vorausgehenden Voreinspritzungen nicht unter einen minimalen Abstandswert verschieben. Dies kann dadurch vermieden werden, dass nach jeder korrigierten Einspritzung, die vor der ersten Haupteinspitzung ausgeführt wird, ein ausreichender zusätzlicher Sicherheitsabstand eingeführt wird, wie im obersten, ersten Diagramm der Figur 4 dargestellt ist. Figur 4 zeigt drei übereinander angeordnete Serien von Einspritzungen bei einer Brennkraftmaschine. Im ersten Diagramm a sind zwei Voreinspritzungen V1, V2, eine erste Haupteinspritzung H1, eine zweite Haupteinspritzung H2 und eine Nacheinspritzung N1 dargestellt. Die zweite Voreinspritzung V2 wird in Bezug auf die erste Haupteinspritzung H1 soweit nach vorne verlegt, dass ein ausreichender zeitlicher Sicherheitsabstand $\delta TS$ zusätzlich zu dem minimal einzuhaltenden zeitlichen Abstand $T_{min}$ zwischen dem Ende der zweiten Voreinspritzung V2 und dem Beginn der ersten Haupteinspritzung H1 gegeben ist.

Nach der Festlegung der zeitlichen Abstände zwischen den einzelnen Einspritzungen können die Zeitdauern der Einspritzungen, die vor der ersten Haupteinspritzung H1 liegen und die Zeitdauer der ersten Haupteinspritzung nach dem erfindungsgemäßen Verfahren korrigiert werden. Im zweiten Diagramm b der Figur 4 ist schematisch ein entsprechendes Korrekturverfahren dargestellt. Für die erste Voreinspritzung V1 muss keine Korrektur berechnet werden, da vor der ersten Voreinspritzung V1 keine Einspritzung stattfindet, die eine merkliche Druckschwankung für die erste Voreinspritzung V1 bewirkt. Somit muss die Einspritzzeitdauer der ersten Voreinspritzung V1 nicht korrigiert werden. Die Einspritzzeitdauer der zweiten Voreinspritzung V2 wird nach Formel 1 berechnet, wobei zusätzlich zu dem Kennfeldwert ein Korrekturwert für die von der ersten Voreinspritzung V1 verursachten Druckschwankung berechnet wird. Der Korrekturwert, der gemäß Formel 1 und 2 berechnet wird, erreicht maximal den Wert $\delta TS$, ist aber im allgemeinen deutlich niedriger. Aufgrund des Korrekturwertes kann, wie in den dargestellten Ausführungsbeispielen gezeigt wird, das Ende der zweiten Voreinspritzung V2 nach späte verschoben sein. Aufgrund des Sicherheitsabstandes $\delta TS$ wird jedoch der minimal einzuhaltende zeitliche Abstand $T_{min}$ zwischen dem Ende der zweiten Voreinspritzung V2 und dem Einspritzbeginn der ersten Haupteinspritzung H1 eingehalten. Für die erste Haupteinspritzung H1 wird gemäß Formel 5 der Kennfeldwert berechnet und ein erster Korrekturwert für die Beeinflussung durch die erste Voreinspritzung V1 und ein zweiter Korrekturwert durch die Beeinflussung der korrigierten zweiten Voreinspritzung V2 berechnet.

In der dritten Diagrammlinie C der Figur 4 ist die Berechnung der Korrektur der Einspritzungen nach der ersten Haupteinspritzung H1 dargestellt. Dabei handelt es sich weiterhin um Einspritzungen, die für die gleiche Verbrennung eines Zylinders abgegeben werden. Die Einspritzzeitdauer einer j-ten Einspritzung Hj werden gemäß Formel 5 berechnet. Dabei werden Korrekturwerte zwischen der j-ten Einspritzung und jeder vorausgehenden Einspritzung dieses Einspritzvorganges dieses Zylinders berücksichtigt. Eine weitere Verbesserung des erfindungsgemäßen Verfahrens wird dadurch erreicht, dass mit entsprechenden Korrekturtermen der Formeln 1 bis 5 alle relevanten Variablen des gesamten hydraulischen Systems, die einen Einfluss auf die Einspritzmenge haben, berücksichtig werden. Dabei können auch Beeinflussungen zwischen Einspritzvorgängen verschiedener Zylinder oder nacheinander folgender Verbrennungsvorgänge berücksichtigt werden.

Nach der Berechnung der korrigierten Einspritzzeitdauer einer Einspritzung bei Programmpunkt 140 wird beim folgenden Programmpunkt 145 überprüft, ob alle Einspritzungen des Einspritzvorganges bzw. des Verbrennungsvorganges des Zylinders korrigiert wurden. Ist dies der Fall, so wird nach Programmpunkt 105 zurückverzweigt. Ergibt jedoch die Abfrage bei Programmpunkt 145, dass noch nicht alle Einspritzungen im Bezug auf Druckschwankungen korrigiert wurden, so wird nach Programmpunkt 135 zurückverzweigt und eine korrigierte Einspritzzeitdauer für die folgende Einspritzung nach dem oben beschriebenen Verfahren bestimmt.

Auf diese Weise werden der Reihe nach beginnend mit der zweiten Voreinspritzung für alle Einspritzungen die Einspritzzeitdauer gemäß den Formeln 1 bis 5 korrigiert. Durch die sukzessive Korrektur der Einspritzzeitdauern der Einspritzungen können für die Berechnung der korrekten Einspritzzeitdauer einer folgenden Einspritzung bereits die korrigierten Einspritzzeitdauern der vorhergehenden Einspritzungen berücksichtigt werden. Damit ist eine präzise Festlegung der Einspritzzeitdauer und somit eine präzise Zumessung der gewünschten Kraftstoffmenge möglich.

Im Wesentlichen kann der Einfluss aller vorhergehenden Einspritzungen eines Verbrennungsvorganges auf eine folgende Einspritzung in Form einer additiven Überlagerung der Einflüsse jeder einzelnen aller vorhergehenden Einspritzungen auf die folgende beschrieben werden. Anhand weiterer Korrekturterme können die Wechselwirkungen aller vorhergehenden Einspritzungen untereinander und deren Auswirkung auf die folgende Einspritzung berücksichtigt werden.

Vorzugsweise werden weitere Korrekturwerte, die Druckschwankungen von vorhergehenden Einspritzungen anderer Einspritzventile der Brennkraftmaschine berücksichtigen, bei der Ermittlung der Einspritzzeitdauer verwendet. Die weiteren Korrekturwerte werden nach den gleichen Verfahren, wie die Korrekturwerte ermittelt.

**Patentansprüche**

1. Verfahren zur Bestimmung einer Einspritzzeitdauer einer folgenden Einspritzung von Kraftstoff in eine Brennkraftmaschine, wobei
   die Einspritzzeitdauer abhängig von einem Kraftstoffdruck und abhängig von einer einzuspritzenden Kraftstoffmenge bestimmt wird, und die Einspritzzeitdauer aus einem ersten Kennfeldwert und einem Korrekturwert bestimmt wird, wobei der Kennfeldwert abhängig von dem Kraftstoffdruck und abhängig von einer einzuspritzenden Kraftstoffmasse aus einem Kennfeld ausgelesen wird, **dadurch gekennzeichnet, dass**
   der Korrekturwert abhängig von dem zeitlichen Abstand zwischen der folgenden Einspritzung und der letzten Einspritzung berechnet wird, wodurch bei der folgenden Einspritzung eine Einspritzzeitdauer einer vorhergehenden Einspritzung berücksichtigt ist.

2. Verfahren nach Anspruch 1, **dadurch gekennzeichnet, dass** der Korrekturwert mit einer Funktion beschrieben ist, die einen Schwingungsfaktor aufweist, der den Einfluss der von der wenigstens letzten Einspritzung erzeugten Druckschwankungen auf die Einspritzmenge bei der Ermittlung der Einspritzzeitdauer berücksichtigt.

3. Verfahren nach Anspruch 2, **dadurch gekennzeichnet, dass** der Schwingungsfaktor eine Sinus- und/oder Kosinusfunktion aufweist.

4. Verfahren nach Anspruch 2 oder 3, **dadurch gekennzeichnet, dass** Parameter der Funktion vom Druck und der Temperatur des Kraftstoffs und von Einspritzzeitdauern und Einspritzmengen der Einspritzungen abhängen.

5. Verfahren nach einem der Ansprüche 1 bis 4, **dadurch gekennzeichnet, dass** die Funktion Korrekturwerte aufweist, dass die Korrekturwerte betriebsbedingte Veränderungen der hydraulischen Komponenten, insbesondere von Einspritzventilen, erfassen.

6. Verfahren nach Anspruch 1 bis 5, **dadurch gekennzeichnet, dass** zur Berechnung der Einspritzzeitdauer einer Einspritzung der Einfluss aller vorhergehenden, bereits korrigierten Einspritzungen eines Einspritzvorgangs berücksichtigt wird.

7. Verfahren nach Anspruch 2 oder 3, **dadurch gekennzeichnet, dass** der Korrekturfaktor einen Dämpfungsfaktor aufweist, dass der Dämpfungsfaktor ein Abklingen der von der wenigstens letzten Einspritzung erzeugten Druckschwankung berücksichtigt.

8. Verfahren nach Anspruch 7, **dadurch gekennzeichnet, dass** der Dämpfungsfaktor in Form einer abklingenden Exponentialfunktion ausgebildet ist, und dass die Exponentialfunktion von der Zeitdifferenz zwischen der folgenden Einspritzung und der wenigstens letzten Einspritzung abhängt.

9. Verfahren nach einem der Ansprüche 1 bis 8, **dadurch gekennzeichnet, dass** zur Berechnung der Einspritzzeitdauer der ersten Haupteinspritzung die Korrekturwerte zwischen den letzten aufgrund der Wechselwirkung korrigierten Einspritzungen berücksichtigt werden.

10. Verfahren nach einem der Ansprüche 1 bis 9, **dadurch gekennzeichnet, dass** in einem ersten Verfahrensschritt abhängig von Betriebsparametern der Brennkraftmaschine und abhängig von der einzuspritzenden Kraftstoffmenge das Einspritzende einer vorhergehenden Einspritzung und der Einspritzbeginn einer folgenden Haupteinspritzung so gewählt werden, dass ein zeitlicher Abstand zwischen der vorhergehenden Einspritzung und der Haupteinspritzung besteht, und
   dass der zeitliche Abstand auch durch eine Verlängerung der Einspritzzeitdauer der vorhergehenden Einspritzung nicht unterschritten wird.

11. Verfahren nach einem der vorhergehenden Ansprüche, **dadurch gekennzeichnet, dass** der zeitliche Abstand der zwei Einspritzungen über eine vorgegebene Zeitdauer variiert wird, dass die Variation des zeitlichen Abstandes für verschiedene Einspritzzeitdauern durchgeführt wird, dass für jede Einspritzung die eingespritzte Kraftstoffmenge gemessen wird und dass ein Kennfeld für die Abhängigkeit der eingespritzten Kraftstoffmenge von dem zeitlichen Abstand und der Einspritzzeitdauer erstellt wird, dass der Korrekturwert durch Interpolation des zeitlichen Abstandes und der einzuspritzenden Kraftstoffmenge **dadurch** ermittelt wird, dass von dem interpolierten Wert eine für den jeweiligen Betriebspunkt in einem Kennfeld hinterlegte Einspritzzeitdauer subtrahiert wird.

**12.** Verfahren nach Anspruch 11, **dadurch gekennzeichnet, dass** das Kennfeld für verschiedene Kraftstoffdrücke ermittelt wird.

**13.** Verfahren nach Anspruch 11 oder 12, **dadurch gekennzeichnet, dass** anhand der experimentell ermittelten Korrekturwerte eine Funktion zur Beschreibung der Korrekturwerte ermittelt wird.

**14.** Verfahren nach einem der vorhergehenden Ansprüche, **dadurch gekennzeichnet, dass** die Korrekturwerte experimentell durch Messungen bestimmt werden, bei denen die vom Einspritzventil eingespritzten Kraftstoffmengen erfasst werden.

**15.** Verfahren nach einem der vorhergehenden Ansprüche, **dadurch gekennzeichnete, dass** weitere Korrekturwerte für die Ermittlung der Einspritzzeitdauern der Einspritzungen des aktuellen Verbrennungsvorganges verwendet werden, und dass die weiteren Korrekturwerte Druckschwankungen von Einspritzungen vorhergehender Verbrennungsvorgänge der Brennkraftmaschine berücksichtigen.

**Claims**

**1.** Method for determining the injection duration of a following injection of fuel into an internal combustion engine, whereby

the injection duration is determined in dependence on a fuel pressure and in dependence on a quantity of fuel to be injected, and the injection duration is determined from a first mapping value and a correction value,

with the mapping value being read out from a characteristic map in dependence on the fuel pressure and in dependence on the mass of fuel to be injected,

**characterised in that**

the correction value is calculated in dependence on the time interval between the following injection and the last injection, as a result of which an injection duration of a preceding injection is taken into account with the following injection.

**2.** Method according to claim 1, **characterised in that** the correction value is described using a function which includes an oscillation factor which takes account of the influence on the injection quantity of the pressure fluctuations generated by at least the last injection in determining the injection duration.

**3.** Method according to claim 2, **characterised in that** the oscillation factor includes a sine and/or cosine function.

**4.** Method according to claim 2 or 3, **characterised in that** parameters of the function depend on the pressure and the temperature of the fuel and on the durations and quantities of the injections.

**5.** Method according to any one of claims 1 to 4, **characterised in that** the function includes correction values, **in that** the correction values encompass operationally determined changes in the hydraulic components, in particular in injection valves.

**6.** Method according to claims 1 to 5, **characterised in that** in calculating the duration of an injection the influence of all the preceding, already corrected injections of an injection process is taken into account.

**7.** Method according to claim 2 or 3, **characterised in that** the correction factor includes a damping factor, **in that** the damping factor takes account of decaying of the pressure fluctuation generated by at least the last injection.

**8.** Method according to claim 7, **characterised in that** the damping factor is configured in the form of a decaying exponential function, and **in that** the exponential function depends on the time difference between the following injection and at least the last injection.

**9.** Method according to any one of claims 1 to 8, **characterised in that**, to calculate the duration of the first main injection, the correction values between the last injections corrected on the basis of the interaction are taken into account.

10. Method according to any one of claims 1 to 9, **characterised in that** in a first process step the end of a preceding injection and the start of a following main injection are so selected, in dependence on operating parameters of the internal combustion engine and in dependence on the quantity of fuel to be injected, that a time interval is present between the preceding injection and the main injection, and **in that** the time interval does not fall below a given value even through a lengthening of the duration of the preceding injection.

11. Method according to one of the preceding claims, **characterised in that** the time interval between the two injections is varied by a predefined duration, **in that** the variation of the time interval is performed for various injection durations, **in that** for each injection the quantity of fuel injected is measured, **in that** a characteristic map is produced for the dependence of the quantity of fuel injected on the time interval and on the injection duration, **in that** the correction value is determined by interpolation of the temporal interval and the quantity of fuel to be injected such that an injection duration stored in a characteristic map for the respective operating point is subtracted from the interpolated value.

12. Method according to claim 11, **characterised in that** the characteristic map is determined for various fuel pressures.

13. Method according to claim 11 or 12, **characterised in that** a function for describing the correction values is determined on the basis of the experimentally determined correction values.

14. Method according to one of the preceding claims, **characterised in that** the correction values are determined experimentally by measurements in which the quantities of fuel injected by the injection valve are captured.

15. Method according to one of the preceding claims, **characterised in that** further correction values are used for determining the durations of the injections of the current combustion process, and **in that** the further correction values take account of pressure fluctuations of injections of preceding combustion processes of the internal combustion engine.

**Revendications**

1. Procédé pour déterminer la durée de l'injection de carburant suivante dans un moteur à combustion interne, dans lequel
la durée de l'injection est déterminée en fonction d'une pression du carburant et en fonction d'une quantité de carburant à injecter, et la durée de l'injection est déterminée sur la base d'une première valeur d'un diagramme caractéristique et d'une valeur de correction, la valeur du diagramme caractéristique étant choisie dans un diagramme caractéristique en fonction de la pression du carburant et en fonction d'une masse de carburant à injecter, **caractérisé en ce que**
la valeur de correction est calculée en fonction de l'intervalle de temps entre l'injection suivante et la dernière injection, de manière qu'une durée de l'injection précédente soit prise en compte lors de l'injection suivante.

2. Procédé selon la revendication 1, **caractérisé en ce que** la valeur de correction est décrite avec une fonction qui présente un coefficient d'oscillation qui prend en compte, lors de la détermination de la durée de l'injection, l'influence exercée sur la quantité d'injection par les fluctuations de pression produites au moins par la dernière injection.

3. Procédé selon la revendication 2, **caractérisé en ce que** le coefficient d'oscillation présente une fonction sinusoïdale et/ou cosinusoïdale.

4. Procédé selon la revendication 2 ou 3, **caractérisé en ce que** des paramètres de la fonction dépendent de la pression et de la température du carburant ainsi que des durées et des quantités des injections.

5. Procédé selon une des revendications 1 à 4, **caractérisé en ce que** la fonction présente des valeurs de correction, **en ce que** les valeurs de correction saisissent des variations des composants hydrauliques, en particulier celles des injecteurs, qui sont dues au fonctionnement.

6. Procédé selon la revendication 1 à 5, **caractérisé en ce que**, pour le calcul de la durée d'une injection, on prend en compte l'influence de toutes les injections précédentes, déjà corrigées, d'une opération d'injection.

7.  Procédé selon la revendication 2 ou 3, **caractérisé en ce que** le coefficient de correction présente un coefficient d'amortissement, **en ce que** le coefficient d'amortissement prend en compte une décroissance de la fluctuation de pression produite au moins par la dernière injection.

8.  Procédé selon la revendication 7, **caractérisé en ce que** le coefficient d'amortissement se présente sous la forme d'une fonction exponentielle décroissante et **en ce que** la fonction exponentielle dépend de la différence de temps entre l'injection suivante et au moins la dernière injection.

9.  Procédé selon une des revendications 1 à 8, **caractérisé en ce que**, pour le calcul de la durée de la première injection principale, les valeurs de correction entre les dernières injections corrigées sur la base de l'interaction sont prises en compte.

10. Procédé selon une des revendications 1 à 9, **caractérisé en ce que**, dans une première étape du procédé, la fin d'une injection précédente et le début d'une injection principale suivante sont choisis en fonction de paramètres de fonctionnement du moteur à combustion interne et en fonction de la quantité de carburant à injecter, de telle manière qu'il subsiste un intervalle de temps entre l'injection précédente et l'injection principale, et **en ce que** l'intervalle de temps est atteint ou dépassé, même sous l'effet d'une prolongation de la durée de l'injection précédente.

11. Procédé selon une des revendications précédentes, **caractérisé en ce que** l'intervalle de temps séparant les deux injections varie sur une durée prédéterminée, **en ce que** la variation de l'intervalle de temps est exécutée pour différentes durées d'injection, **en ce que**, pour chaque injection, la quantité de carburant injecté est mesurée et **en ce qu'**un diagramme caractéristique pour la dépendance de la quantité de carburant injecté vis-à-vis de l'intervalle de temps et vis-à-vis de la durée de l'injection est établi, **en ce que** la valeur de correction est établie par interpolation de l'intervalle de temps et de la quantité de carburant à injecter, par le fait que, de la valeur interpolée, on soustrait une durée d'injection qui est sauvegardée dans un diagramme caractéristique pour le point de travail considéré.

12. Procédé selon la revendication 11, **caractérisé en ce que** le diagramme caractéristique est déterminé pour différentes pressions de carburant.

13. Procédé selon la revendication 11 ou 12, **caractérisé en ce qu'**au moyen des valeurs de correction déterminées expérimentalement, on détermine une fonction pour la description des valeurs de correction.

14. Procédé selon une des revendications précédentes, **caractérisé en ce que** les valeurs de correction sont déterminées expérimentalement par des mesures lors desquelles les quantités de carburant injectées par l'injecteur sont saisies.

15. Procédé selon une des revendications précédentes, **caractérisé en ce que** des valeurs de correction additionnelles sont utilisées pour la détermination des durées des injections du processus de combustion actuel et **en ce que** les valeurs de correction additionnelles prennent en compte des fluctuations de pression d'injections de processus de combustion précédents du moteur à combustion interne.

FIG 1

FIG 2

```
                    ┌──────────┐
                    │  Start   │──100
                    └────┬─────┘
                         │
                         ▼
              ┌────────────────────┐
              │   Last / Drehzahl  │──105
              └─────────┬──────────┘
                        │
                        ▼
              ┌────────────────────┐
              │   Einspritzmenge   │──110
              └─────────┬──────────┘
                        │
                        ▼
              ┌────────────────────┐
              │      Aufteilung    │──115
              │ Vor/Haupteinsprizung│
              └─────────┬──────────┘
                        │
                        ▼
              ┌────────────────────┐
              │       Druck        │──120
              └─────────┬──────────┘
                        │
                        ▼
              ┌────────────────────┐
              │ Einspritzzeitpunkte│──125
              └─────────┬──────────┘
                        │
                        ▼
              ┌────────────────────┐
              │    Kennfeldwert    │──130
              └─────────┬──────────┘
                        │
                        ▼
              ┌────────────────────┐
              │   Korrekturwert    │──135
              └─────────┬──────────┘
                        │
                        ▼
              ┌────────────────────┐
              │     korrigierte    │──140
              │   Einspritzdauer   │
              └─────────┬──────────┘
                        │
                        ▼    145
                   N  ◇
                  ◇       ◇
                 ◇         ◇
                  ◇       ◇
                     ◇   J
```

FIG 3

EP 1 613 853 B1

FIG 4A

FIG 4B

FIG 4C

**EP 1 613 853 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1064457 B1

- DE 19937148 A1